# EUROPÄISCHE PATENTANMELDUNG

(11) **EP 2 910 920 A1**
(43) Veröffentlichungstag der Anmeldung: **26.08.2015**
(21) Anmeldenummer: 14001403.6
(22) Anmeldetag: 16.04.2014
(51) Int. Cl.: G01M 3/24

(54) **Verfahren zur Synchronisation der Datenaufzeichnungen in Rohleitungsnetzen**

(30) Priorität: 09.10.2013 DE 102013016744; 12.03.2014 DE 102014003554
(71) Anmelder: Seba-Dynatronic Mess- und Ortungstechnik GmbH, 88131 Lindau (DE)
(72) Erfinder: Iann, Max, 96148 Baunach (DE); Schuberth, Harald, 96149 Breitengüßbach (DE); Sarvan, Michael, 96047 Bamberg (DE)

(57) **Zusammenfassung**

Verfahren und Vorrichtung zur Synchronisation der Datenaufzeichnung in Rohrleitungsnetzen, in welchem mindestens zwei in einem Abstand voneinander angeordnete Sensoreinheiten zur Erkennung eines Lecks angeordnet sind, wobei jede Sensoreinheit mindestens einen Sensor zur Erfassung eines Analogsignals, mindestens einen GPS-Empfänger und mindestens ein Kommunikationsmodul aufweist, welches funkgestützt mit mindestens einem Datensammler kommuniziert, wobei die Synchronisierung zur Datenaufzeichnung über ein GPS-Triggerimpuls von mindestens einem GPS-Satelliten gestartet wird.

## Beschreibung

Die Erfindung betrifft ein Verfahren und eine Vorrichtung zur Synchronisation der Datenaufzeichnung in Rohrleitungsnetzen.

Als Stand der Technik wird die DE 195 28 287 C5 genannt. Diese Druckschrift betrifft ein Verfahren zur Erkennung eines Lecks in einem Trinkwasser-Versorgungsnetz und einer Anordnung zur Durchführung des Verfahrens.

Aus dieser Druckschrift ist bereits schon bekannt, dass eine Mehrzahl von mindestens drei Schallsensoren in einer Konfiguration positioniert werden, die eine korrelierende Verarbeitung der Ausgangssignale eines beliebigen Sensors mit denjenigen mindestens zweier weiterer, einseitig von diesem angeordneten Sensoren erlaubt.

Hierbei wird vorausgesetzt, dass in einem Wasserleitungsnetz eine Vielzahl von Sensoren verteilt angeordnet sind und jeder Sensor mit einem Kommunikationsmodul verbunden ist, welches funkgestützt mit einer Zentrale und einem dort angeordneten Datensammler kommuniziert.

Auf ein Abrufen mit Hilfe eines funkgesteuerten Abrufsignals von der Zentrale aus senden dann die den einzelnen Sensoren zugeordneten Kommunikationsmodule ihre am Messort erzeugten digitalen Daten an die Zentrale.

Diese Druckschrift gibt keine Auskunft über die Art der Synchronisierung der Signale der einzelnen Sensoren. Es wird einfach eine Synchronisierung der Signale dieser Sensoren vorausgesetzt. Durch was dies erfolgt und durch welche Maßnahmen, ergibt sich für den Fachmann nicht aus dieser Druckschrift.

Nachteil der funkgesteuerten Abrufung der digitalen Daten von dem jeweiligen Sensor ist, dass - wenn das Abrufsignal in irgendeiner Weise gestört wird - dann der aufgeforderte Sensor und das dazu gehörende Kommunikationsmodul keine Daten sendet. Es fehlt dann der Aufrufimpuls und damit treten erhebliche Fehler bei der Datenauswertung ein.

Es ist auch nicht möglich, eine Auswertung zu vollziehen, weil eben die Signale der aufgeforderten Sensoren fehlen und nicht nachgereicht werden können.

Die JP 3829966 B2 beschäftigt sich mit dem Problem der Synchronisierung von Signalen von Sensoren, die mit jeweils einem Kommunikationsmodul verbunden sind.

Die genannte Druckschrift verwendet hierzu ein GPS-Signal eines Satelliten und hat zum Gegenstand, dass jedem Sensor ein Funk-Empfangsmodul zugeordnet ist, so dass das Satellitensignal über die Funkschnittstelle vom Satelliten direkt auf das Kommunikationsmodul des Sensors geschickt wird. Damit erhält jedes Kommunikationsmodul des Sensors ein GPS-Satellitensignal und kann somit hochgenau synchronisiert werden.

Nachteil dieser Anordnung ist allerdings, dass das Synchronisierungssignal des GPS-Satelliten dem Audiosignal des Sensors aufgeprägt wird. Damit besteht die Gefahr, dass das Audio-Signal in dem Moment, wo das Satellitensignal auf das Audio-Signal aufgeprägt wird, teilweise oder vollständig überschrieben wird, was zu erheblichen Fehlereinflüssen führen kann.

Der Erfindung liegt deshalb ausgehend von der JP 3829966 B2 die Aufgabe zugrunde, ein Verfahren zur Synchronisation der Datenaufzeichnung in Rohrleitungsnetzen so weiterzubilden, dass eine wesentlich betriebssicherere Synchronisation ohne Störung des Datenverkehrs gegeben ist.

Zur Überwachung von Rohrleitungsnetzen und zur Ortung von Leckagen werden nach bisherigem Stand der Technik unter anderem akustische Verfahren eingesetzt. Bei diesen Verfahren wird das bei einer unter Druck stehenden Rohrleitung an einer Leckage entstehende Geräuschsignal über akustische Sensoren aufgezeichnet und weiterverarbeitet.

Die Signalanalyse geschieht entweder nur an einem einzelnen Messpunkt oder an mehreren Punkten im Netz. Zur genauen Ortung der Leckage werden die Messergebnisse miteinander verglichen.

Eine Möglichkeit, mit der sich die Leckstelle punktgenau orten lässt, ist die Korrelation.

Dabei wird an der Messstelle ein Geräuschsignal über Körperschallmikrofone oder Hydrophone aufgenommen und mit Hilfe einer digitalen Elektronik weitergeleitet. Das Signal von zwei oder mehr Messstellen wird dann einer Korrelationsfunktion ausgewertet. Mit der Korrelation kann die Ähnlichkeit, sowie die zeitliche Verzögerung zwischen zwei Signalen berechnet werden. Aus der zeitlichen Verzögerung, der Länge der Leitung zwischen zwei Messstellen und der Ausbreitungsgeschwindigkeit des korrelierten Signals lässt sich der Abstand zwischen Leck und den beiden Messstellen berechnen.

Entscheidend für die Korrelation ist die Synchronisation bei der Aufzeichnung der Messsignale. Ein Fehler in der Synchronisation geht direkt als Messfehler im Bezug auf den Abstand zur Leckage ein. Die geforderte Genauigkeit liegt im Bereich von wenigen Millisekunden.

Bisher wird die Synchronisation durch folgende Maßnahmen erreicht:
- Feldkorrelator: die Geräuschsignale werden in zwei oder mehr Kanälen zur gleichen Zeit per Kabel oder Funk an die Haupteinheit (Korrelator) übertragen. Damit ergibt sich automatisch eine synchronisierte Abtastung im Korrelator.
- Korrelierende Funklogger: Das Funknetz, über welches die Datenkommunikation zwischen den Loggern erfolgt, dient gleichzeitig der Synchronisation bei der Aufzeichnung. Dies bedeutet, dass innerhalb des Netzes eine Echtzeit-Funkkommunikation möglich sein muss.

Da die Korrelation auch über größere Entfernungen durchgeführt wird, ist unter Umständen eine direkte Funkkommunikation zwischen den Messstellen nicht möglich. Damit entfällt auch die Möglichkeit der Synchronisation mit der erforderlichen Genauigkeit.

Beispielsweise wird Datenübertragung über GSM/GPRS-Netze realisiert. Diese Netze erlauben zwar eine Übertragung der Audiodaten und weiteren Informationen, sie eignen sich aber nicht zu einer Synchronisierung der Datenaufzeichnung.

Zur Lösung der gestellten Aufgabe ist die Erfindung durch die technische Lehre des Anspruchs 1 gekennzeichnet.

Wesentliches Merkmal der Erfindung ist, dass das Trigger-Signal des GPS-Satelliten lediglich als Start-Signal für die Datenaufzeichnung eines Analog-Signals des Sensors verwendet wird, wobei dieses GPS-Trigger-Signal das Startsignal für den A/D-Wandler ist, der für eine genau definierte Zeit die Auswertung des Analog-Signals ausführt und das Analog-Signal in ein digitales Datenwort umsetzt.

Damit besteht der wesentliche Vorteil, dass nun das GPS-Triggersignal lediglich als Signal für den A/D-Wandier verwendet wird und weder dem Analog-Signal aufgeprägt wird, was zu einer Störung des Analog-Signals führen könnte, noch durch eine hochgenaue Uhr oder dergleichen erfolgt, wie es in der DE 195 28 287 C5 vorgegeben ist.

Der Start der Messzeit oder der Auswertung des A/D-Wandier ist somit eine genau festgelegte Synchronisationsgrösse und alle Sensoren mit dem angeschlossenen Kommunikationsmodul führen zur gleichen Zeit diese Aufzeichnung aus. Dies bedeutet, dass zwar das Analog-Signal ständig am jeweiligen A/D-Wandler des jeweiligen Sensors anliegt, dass aber - gesteuert durch das Signal, welches vom GPS-Satelliten erzeugt wurde, der A/D-Wandler zu einer ganz genau definierten Zeit die Auswertung des Analog-Signals beginnt und wieder beendet.

Das GPS-Triggersignal kann somit als Start-Signal, als auch als Abbruch-Signal für den A/D-Wandier verwendet werden.

Hierbei ist es nicht lösungsnotwendig, dass das GPS-Signal auch das Ende des Umwandlungsvorganges im A/D-Wandler bestimmt. Der A/D-Wandier kann praktisch nach einem einmaligen Start ständig in Betrieb sein und die Umwandlung ausführen, wobei man am Ausgang des A/D-Wandlers dann ein bestimmtes Datenwort abgreift, welches in einen nachgeschalteten Speicher eingeschrieben wird.

Für folgende zwei Varianten kann das GPS bei der vorliegenden Erfindung bevorzugt benutzt werden:
a) Der A/D-Wandler wandelt permanent das Eingangssignal in einen digitalen Datenstrom um. Durch das GPS-Signal wird nur der Zeitpunkt festgelegt, ab dem die Daten in den nachfolgenden Speicher geschrieben werden.
b) Der A/D-Wandler wandelt permanent das Eingangssignal in einen digitalen Datenstrom um, welches rotierend in einen nachfolgenden Speicher geschrieben wird. Durch das GPS-Signal wird hierbei nur der Beginn eines Datenblockes innerhalb des Speichers markiert, welcher für die nachfolgende Datenverarbeitung verwendet wird.

Unter einem rotierenden Beschreiben des Speichers versteht die Anmeldung, dass wenn der der Speicher voll ist, Speicherzeiger wieder zurück auf den Anfang springt und die ältesten Daten mit aktuellen Daten überschreibt. Dieser Zeiger "rotiert" also permanent über den ganzen Speicherbereich. So wird gewährleistet, dass immer die aktuellsten Daten vorhanden sind.

Zum Kommunikationsmodul gehört also ein Datenspeicher, in dem periodisch die vom A/D-Wandler erzeugten Datenwörter eingeschrieben werden. Das Kommunikationsmodul übermittelt dann die gespeicherten Daten selbständig-bevorzugt funkgestützt - an die Zentrale mit dem dort angeordneten Datensammler.

Es kann sich hierbei um verschiedene Funkübertragungsverfahren handeln.

In einer ersten Ausgestaltung der Erfindung ist es vorgesehen, dass die funkgestützte Übertragung über das GSM-Netz erfolgt. Dies hat den Vorteil, dass über ein solches Netz noch weitere digitale Informationen übertragen werden können, die z. B. die ID des Sensors, bestimmte Parameter und dergleichen mehr.

In einer zweiten Ausgestaltung der Erfindung kann es vorgesehen sein, dass ein separates Funknetz verwendet wird, welches in verschiedene Kanäle aufgeteilt ist, wobei jedem Sensor ein entsprechender Übertragungskanal zugeordnet wird.

Diese Funkübertragung kann in verschiedenen Übertragungs-Modi stattfinden, z. B. im Multiplex-Prinzip, im Zeitschlitz-Verfahren und dergleichen mehr.

Vorteil des erfindungsgemässen Verfahrens ist demnach, dass es zu einer unaufgeforderten Absendung der digitalen Daten der jeweiligen Sensor-Kommunikations-Module an die Zentrale kommt, so dass damit ausgeschlossen ist, dass ein Signal gestört ist. Wird von der Zentrale ein bestimmtes Signal eines Kommunikations-Moduls nicht empfangen, unterbleibt die Auswertung.

Der jeweilige Sensor mit dem zugeordneten Kommunikations-Modul sendet dann zum nächst möglichen Zeitpunkt wieder, wobei solche Zeitpunkte beliebig wählbar sind. Es können Zeitpunkte von z. B. 1 Tag, mehreren Stunden oder dergleichen vorgesehen werden.

Im weltweit verfügbaren GPS-Netz wird über Satelliten ein sehr genaues Zeitsignal übertragen, der sogenannte "Sekundenimpuls". Der Sekundenimpuls eines GPS-Empfängers hat einen Jitter von wenigen Nanosekunden, daher kann GPS als Zeitstandard für Frequenz und Zeitmessungen verwendet werden. Manche GPS-Empfänger liefern ein Korrektursignal und sind für diese Aufgabe besonders geeignet. Wird nun an Messstellen, die nicht in direktem Funkkontakt zueinander stehen ein solches GPS-Modul verwendet, kann über dieses die notwendige Synchronisierung zur Datenaufzeichnung geschehen.

Die eigentliche Übertragung der Messdaten geschieht dann weiterhin über Funknetze, GSM, GPRS, etc.

Der Kern der Erfindung liegt demnach darin, dass ein Verfahren zur Ortung von Leckagen in einem Rohrleitungsnetz vorgeschlagen wird, wobei die Synchronisierung zur Datenaufzeichnung über den so genannten Sekundenimpuls eines GPS-Satellitennetzes erreicht wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert eine Darstellung eines Kommunikationsnetzes von Sensoren, die über einen GPS-Satelliten synchronisiert werden
- Figur 2:: schematisiert ein Blockschaltbild eines Sensors mit Kommunikations-Modul
- Figur 3:: schematisiert die Signalfolge an einem Sensor mit Umsetzung in ein digitales Datenwort
- Figur 4:: der dazu gehörende Sekunden-Trigger-Impuls des GPS-Satelliten
- Figur 5:: ein Signalverlauf eines Sensors, der keine geräuschinduzierten Analogdaten empfangen hat
- Figur 6:: schematisiert die Darstellung eines Korrelators mit der Angabe der Ausgangsimpulse.

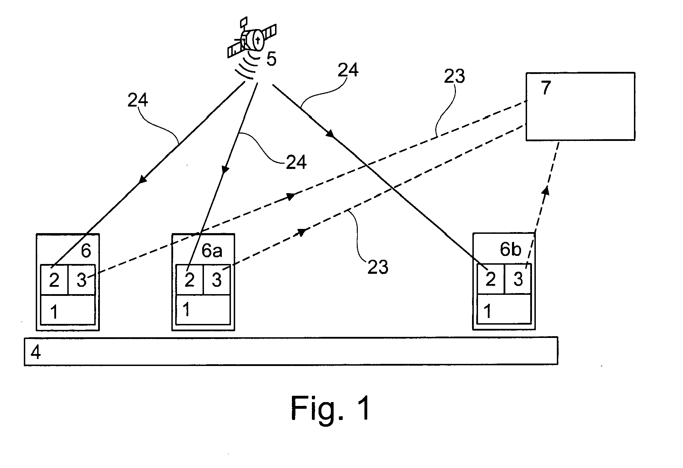

In Figur 1 ist schematisiert dargestellt, dass längs eines Rohrleitungsnetzes 4, welches stark verzweigt sein kann, eine Anzahl von Sensoreinheiten 6, 6a, 6b angeordnet sind, wobei jede Sensoreinheit 6, 6a, 6b mindestens einen analogen Sensor 1, mindestens einen GPS-Empfänger 2 und mindestens ein Kommunikationsmodul 3 aufweist. Das Kommunikationsmodul 3 ist in der Lage, funkgestützt über jeweils eine Funkstrecke 23 die erzeugten digitalen Daten an einen Datensammler 7 zu senden, der bevorzugt als Zentrale ausgebildet ist.

Von dem GPS-Satelliten 5 bzw. von einem GPS-Satellitennetz 5 wird in an sich bekannter Weise ein so genannter Sekundenimpuls übertragen, der über die Funkstrecke 24 gleichzeitig und synchron jedem der Sensor-Einheiten 6, 6a, 6b zugeschickt wird. Dieser Trigger-Impuls 10 wird von dem jeweiligen GPS-Empfänger 2 in der Sensor-Einheit 6, 6a, 6b empfangen und ausgewertet.

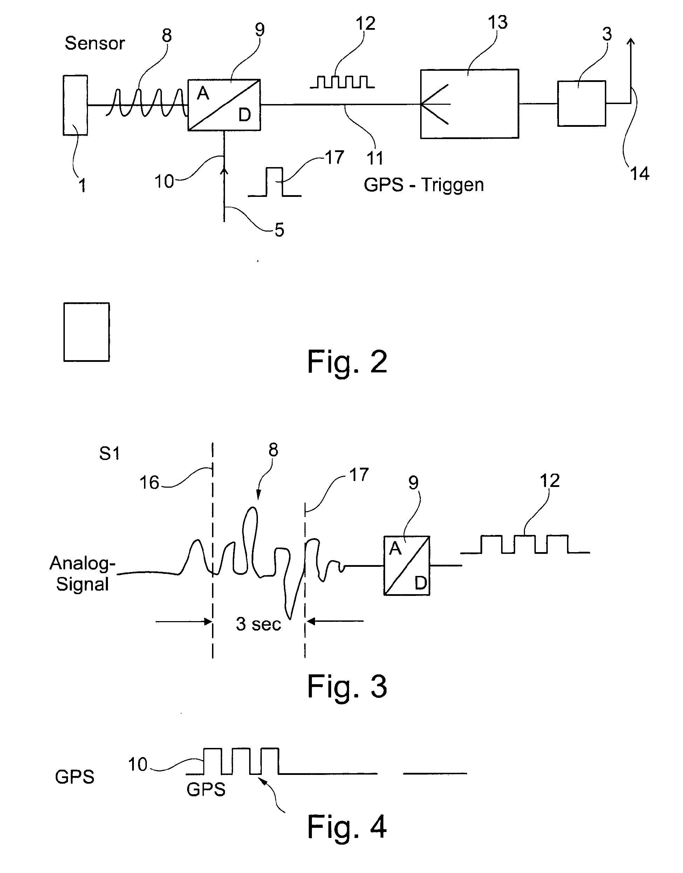

Die Figur 2 zeigt schematisiert ein Blockschaltbild einer Sensoreinheit 6, wo erkennbar ist, das ein analoger Sensor 1 ein leckgeräusch-induziertes Analog-Signal 8 erzeugt, welches einem A/D-Wandler 9 zugeführt wird. Wichtig ist nun, dass der vom GPS-Satelliten 5 erzeugte Trigger-Impuls 10 (=Sekundenimplus) als GPS-Trigger-Signal 17 nun ein Startsignal 16 für den Beginn der Auswertung des Analog-Signals 8 gemäß Figur 3 verwendet wird.

Der A/D-Wandler 9 führt nach Figur 2 demnach die AD-Wandlung durch und erzeugt ein digitales Datenwort 12, welches in einen Speicher 13 eingeschrieben wird. Am Ausgang des Speichers 13 ist das Kommunikationsmodul 3 mit der Antenne 14 angeordnet, welche eine Übertragung auf der Funkstrecke 13 in Richtung zum Datensammler 7 ausführt.

In einer weiteren bevorzugten Ausführungsform wandelt der A/D-Wandler 9 permanent das Analogsignal 8 in einen digitalen Datenstrom um. Durch das GPS-Signal 16 wird dann nur der Zeitpunkt festgelegt, ab dem die Daten 12 in den nachfolgenden Speicher 13 geschrieben werden.

Eine weitere Ausführungsform ist, dass der A/D-Wandler 9 permanent das Analogsignal 8 (=Eingangssignal) in einen digitalen Datenstrom 12 umwandelt, welcher rotierend in einen nachfolgenden Speicher 13 geschrieben wird. Durch das GPS-Signal 16,17 wird nur der Beginn eines Datenblockes innerhalb des Speichers 13 markiert, welcher für die nachfolgende Datenverarbeitung verwendet wird.

Gemäß Figur 3 wird demnach das GPS-Triggersignal 17 als Startsignal 16 für das leckgeräusch-induzierte Analog-Signal 8 verwendet, welches für einen bestimmten Zeitraum ausgewertet wird.

Statt der Auswertung über einen bestimmten Zeitraum kann auch eine dauernde Auswertung erfolgen. Die Auswertung erfolgt im A/D-Wandler 9, der daraus das digitale Datenwort 12 erzeugt.

In Figur 4 ist dargestellt, dass der Trigger-Impuls 10 von dem GPS-Trigger-Signal abgeleitet wird und hier z. B. eine Messzeit von z. B. drei Sekunden vorgesehen ist.

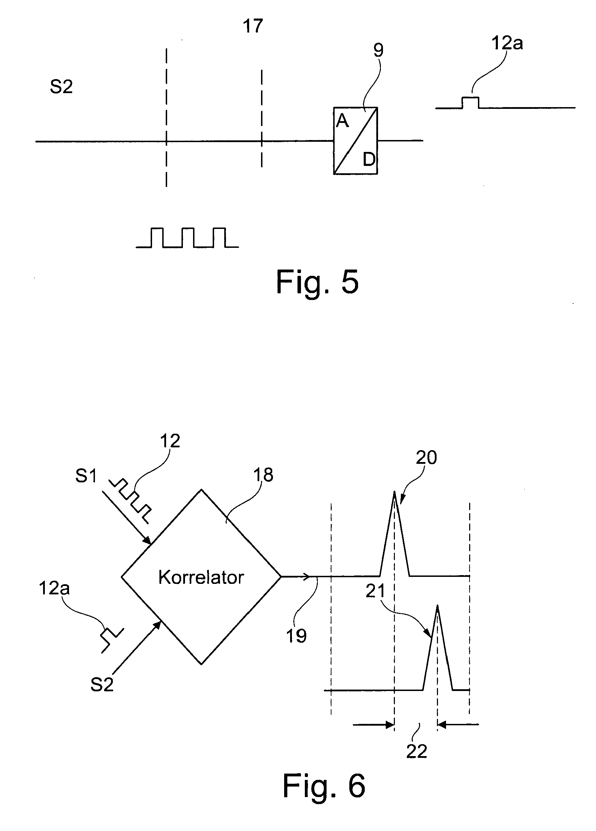

Figur 5 zeigt, dass das Startsignal 16 auch dem anderen Sensor S2 zugeführt wird, der jedoch in der Messzeit kein leckgeräusch-induziertes Analog-Signal empfangen hat, so dass der nachgeschaltete A/D-Wandier ein von dem Datenwort 12 unterschiedliches weiteres Datenwort 12a erzeugt.

Gemäß Figur 6 werden die beiden digitalen Datenwörter 12, 12a in einen Korrelator 18 eingespeist, an dessen Ausgang 19 die Korrelationsfunktion 20 erscheint.

Ist die Korrelationsfunktion 20 etwa in der Mitte zwischen zwei Messpunkten angeordnet, wie in Figur 6 dargestellt, lässt sich hieraus erkennen, dass das Leckgeräusch mittig zwischen zwei Sensoren 6, 6a entstanden ist.

Ist hingegen die Korrelationsfunktion 21 um eine Verzögerung 22 z. B. nach links oder rechts verschoben, so lässt sich hieraus entnehmen, dass das Leckgeräusch mehr in der Nähe der einen Sensoreinheit 6 oder der anderen Sensoreinheit 6a entstanden ist.

Vorteil des erfindungsgemässen Verfahrens ist es die Aufzeichnungen unterschiedlicher Sensoreinheiten 6, 6a, 6b zu synchronisieren, welche untereinander keinen Funkkontakt haben.

Bei der DE 195 28 287 C5 wurde nämlich vorausgesetzt, dass die einzelnen Sensoreinheiten untereinander kommunizieren. Dies ist bei der Erfindung nicht notwendig. Bei der Erfindung besteht der Vorteil, dass das GPS-Trigger-Signal nur als Trigger-Impuls für die Einleitung der AD-Wandlung verwendet wird, wodurch ausgeschlossen ist, dass das Analog-Signal selbst durch das Trigger-Signal gestört werden könnte. Bei der Erfindung wird eine stetige periodische Synchronisierung-bedingt durch das Sekunden-Signal des GPS-Trigger-Signals 17 - erzeugt, was gerade beim Gegenstand der DE 195 28 287 C5 nicht der Fall ist, denn dort erfolgt eine Synchronisation über quarzgesteuerte Uhren oder dergleichen, die bekannter Weise ihre Genauigkeit verlieren und stets nachjustiert werden müssen.

Ein GPS-Signal ist an jedem beliebigen Ort verfügbar und es besteht der Vorteil, dass über die Ausrechnung der GPS-Koordinaten der jeweiligen Sensoreinheit auch der Abstand und der Ort der jeweiligen Sensoreinheiten im Leitungsnetz erfasst werden kann und ebenfalls an den Datensammler übertragen wird. Aus der Entfernungs-Information und der Verzögerungszeit, die aus der Korrelations-Funktion 20, 21 bezüglich der Verzögerung 22 gegeben ist, wird der Abstand eines Lecks zu den Sensoren bestimmt. Eine solche Bestimmung ist sehr genau.

### Zeichnungslegende

- 1.: Sensor
- 2.: GPS-Empfänger
- 3.: Kommunikationsmodul
- 4.: Rohrleitungsnetz
- 5.: GPS-Satellit
- 6.: Sensoreinheit 6a, b
- 7.: Datensammler (Zentrale)
- 8.: Analogsignal
- 9.: A/D-Wandler
- 10.: Triggerimpuls
- 11.: Ausgang
- 12.: Datenwert 12a
- 13.: Speicher
- 14.: Antenne
- 15.:
- 16.: Startsignal
- 17.: GPS-Triggersignal
- 18.: Korrelator
- 19.: Ausgang
- 20.: Korrelationsfunktion
- 21.: Korrelationsfunktion
- 22.: Verzögerung
- 23.: Funkstrecke
- 24.: Funkstrecke

## Patentansprüche

1. Verfahren zur Synchronisation der Datenaufzeichnung in Rohrleitungsnetzen (4), in welchem mindestens zwei in einem Abstand voneinander angeordnete Sensoreinheiten (6, 6a, 6b) zur Erkennung eines Lecks angeordnet sind, wobei jede Sensoreinheit (6, 6a, 6b) mindestens einen Sensor (1) zur Erfassung eines Analogsignals (8), mindestens einen GPS-Empfänger (2) und mindestens ein Kommunikationsmodul (3) aufweist, welches funkgestützt mit mindestens einem Datensammler (7) kommuniziert, **dadurch gekennzeichnet, dass** die Synchronisierung zur Datenaufzeichnung über ein GPS-Triggerimpuls (17) von mindestens einem GPS-Satelliten (5) gestartet wird.

2. Verfahren nach Anspruch 1, **dadurch gekennzeichnet, dass** das GPS-Triggersignal (17) als Start-Signal (16) für mindestens einen A/D-Wandler (9) verwendet wird, welcher die Digitalisierung des Analog-Signals (8) durchführt.

3. Verfahren nach Anspruch 1 oder 2, **dadurch gekennzeichnet, dass** das GPS-Triggersignal (17) alle Sensoreinheiten (6, 6a, 6b) mit den jeweiligen A/D-Wandlern (9) gleichzeitig anspricht.

4. Verfahren nach einem der Ansprüche 1 bis 3, **dadurch gekennzeichnet, dass** der A/D-Wandlern (9) für eine definierte Zeit mit der Auswertung beginnt und wieder beendet.

5. Verfahren nach einem der Ansprüche 1 bis 4, **dadurch gekennzeichnet, dass** das GPS-Triggersignal (17) als Abbruchsignal für den A/D-Wandler (9) verwendet wird.

6. Verfahren nach einem der Ansprüche 1 bis 5, **dadurch gekennzeichnet, dass** das Kommunikationsmodul (3) entweder die funkgestützte Übertragung über ein GSM-Netz oder über ein separates Funknetz ausführt.

7. Verfahren nach einem der Ansprüche 1 bis 6, **dadurch gekennzeichnet, dass** der Abstand und die Position der Sensoreinheit (6, 6a, 6b) aufgrund des GPS-Triggersignals (17) erfassbar ist und an den Datensammler (7) übertragen wird.

8. Verfahren nach einem der Ansprüche 1 bis 7, **dadurch gekennzeichnet, dass** aus einer Korrelations-Funktion (20, 21) und einer möglichen Verzögerung (22) der Abstand eines Lecks zu den Sensoren (6, 6a, 6b) bestimmbar ist.

9. Verfahren nach einem der Ansprüche 1 bis 8, **dadurch gekennzeichnet, dass** der A/D-Wandler (9) permanent das Analogsignal (8) in einen digitalen Datenwert (12) umwandelt und dass das GPS-Signal (16) den Zeitpunkt festgelegt, ab dem die Daten (12) in den nachfolgenden Speicher (13) geschrieben werden.

10. Verfahren nach einem der Ansprüche 1 bis 9, **dadurch gekennzeichnet, dass** der A/D-Wandler (9) permanent das Analogsignal (8) in einen digitalen Datenstrom (12) umwandelt, welcher rotierend in einen nachfolgenden Speicher (13) geschrieben wird und dass das GPS-Signal (16) den Beginn eines Datenblockes innerhalb des Speichers (13) markiert.

11. Vorrichtung zur Synchronisation der Datenaufzeichnung in Rohrleitungsnetzen (4), in welchem mindestens zwei in einem Abstand voneinander angeordnete Sensoreinheiten (6, 6a, 6b) zur Erkennung eines Lecks angeordnet sind, wobei jede Sensoreinheit (6, 6a, 6b) mindestens einen Sensor (1), mindestens einen GPS-Empfänger (2) und mindestens ein Kommunikationsmodul (3) aufweist, welches funkgestützt mit mindestens einem Datensammler (7) kommuniziert, **dadurch gekennzeichnet, dass** jede Sensoreinheit (6, 6a, 6b) einen GPS-Empfänger (2) aufweist, welcher ein GPS-Triggersignal (17) empfängt, das einen A/D-Wandler (9) startet.
